# EUROPEAN PATENT APPLICATION

(11) **EP 3 544 255 A1**
(43) Date of publication of application: **25.09.2019**
(21) Application number: 18165790.9
(22) Date of filing: 04.04.2018
(51) Int. Cl.: H04L 29/06

(54) **METHOD AND SYSTEM FOR ISSUING PROOF-EQUIPPED CERTIFICATES FOR CERTIFICATE AUTHORITY**

(30) Priority: 23.03.2018 US 201815933535
(71) Applicant: ProofShow Inc., 10595 Taipei (TW)
(72) Inventor: CHANG, Yan-Cheng, 10595 Taipei (TW)
(74) Representative: Lang, Christian

(57) **Abstract**

A method and a system for issuing proof-equipped certificates for a Certificate Authority (CA) are disclosed. The system includes an I/O processing module and a certificate generation module. The present invention technically embeds a CSR in a DKIM email and utilizes the DKIM email as a verifiable proof for authorization of certificate issuance so that voluminous disposable digital certificates that expire in a very short time can be issued while existing CAs cannot do so due to the lack of verifiability. It makes trust transfer from the CA to a third party who owns the DKIM email server. Since a private key can be dynamically created and immediately wiped out from computer memory, hardware tokens for keeping the private key are no long required. Due to the very soon expiration time of digital certificate, revocation checks become unnecessary, or are only required to be simulated for compatibility. The present invention settles the problem of usability for digital signatures and the problem of verifiability for CAs.

## Description

### FIELD OF THE INVENTION

The present invention relates to a method and a system for issuing certificates for a Certificate Authority (CA). More particularly, the present invention relates to a method and a system for issuing proof-equipped certificates for a CA to make the CA itself verifiable. The proof-equipped certificates can be used for digital signature.

### BACKGROUND OF THE INVENTION

Digital signature technology, which involves cryptographic keys, was invented decades ago for paperless workflows, yet arguably it is not widely used today. Both Adobe Acrobat Reader and Microsoft Word, the two most widespread digital document software applications, come with tools for creating digital signatures. However, only few people know the benefits of these built-in features. Thus, there are still lots of documents waiting for handwritten signatures or electronically notarized signatures (e.g. DocuSign) since these signatures are mostly accepted as the proofs of identity and intent allowing daily jobs to be done.

Most existing digital signature infrastructures (a.k.a. Public Key Infrastructures, PKIs) require both hardware tokens (e.g. smart cards) to adequately protect the security of users' private keys and revocation checks (e.g. Certificate Revocation Lists, CRLs) to confirm the point-of-time validity of users' public keys. The cost and inconvenience associated with the hardware tokens greatly prevent the public from adopting the technology, while the unverifiability, on top of the opacity, of the revocation checks could lead to trust meltdown, which in turn can lead to negative public opinion on the technology.

In order to remove the obstacles mentioned above, it is necessary to know why hardware tokens and revocation checks are required by the PKIs. A PKI is centralized around a Certificate Authority (CA) which is a trusted third party that certifies users' public keys by issuing public key certificates. A user needs to apply for such a certificate from a CA for his public key if he wants to use the corresponding private key, normally embedded in a hardware token for security reasons, to create valid digital signatures. The CA can revoke an issued certificate before the expiration time it specifies on the certificate (usually 1-5 years after issuance) for a reason. Thus, it needs to offer a way for everyone to check if a certificate is still valid at a given time. A revocation check is such a way to confirm the validity of an issued certificate. Moreover, if a proof of such point-of-time validity is available, it can be associated with a digital signature to make the digital signature Long-Term Validated (LTV), which is a property that ensures the following: at any time in the future (even after the corresponding certificate expires or gets revoked), it must be possible to validate the document to confirm that the digital signature was valid at the time it was signed. From the description above, it is obvious that the hardware tokens and revocation checks are relied by PKIs due to their roles in the chain of tru st.

Come back to CAs. Before issuing a certificate, CAs have to receive a Certificate Signing Request (CSR) from an applicant. The CSR usually contains a public key for which the certificate should be issued, identifying information (e.g. an email address) and a digital signature of the applicant. It is the responsibility of the CA to make sure such identifying information matches the real identity of the applicant who sends out the CSR before a certificate with such identifying information can be issued to the applicant, while users and relying parties need to trust that the CA can be so responsible. Based on this point, if there is a technical way to replace the need of such trust, voluminous disposable digital certificates that expire in a very short time may be issued so that hardware tokens and revocation checks may be unnecessary. Specifically, if the need of trust in the CA can be technically transferred to other trusted parties, the verifiability problem that prevents existing CAs from issuing voluminous disposable digital certificates which can settle the usability problem of digital signatures may be settled. However, there are no practical and useful solutions available.

### SUMMARY OF THE INVENTION

This paragraph extracts and compiles some features of the present invention; other features will be disclosed in the follow-up paragraphs. It is intended to cover various modifications and similar arrangements included within the spirit and scope of the appended claims.

In order to settle the problems mentioned above, a method for issuing proof-equipped certificates for a CA is disclosed. The method comprises the steps of: a) generating a private key and a public key by a software application installed in a computing device which has a processing unit operating the software application and a memory unit storing the keys; b) creating a Certificate Signing Request (CSR) including the public key by the software application; c) enabling access to a Domain Keys Identified Mail (DKIM) email account of a DKIM email server of a specific domain by the software application; d) encoding the CSR and embedding the encoded CSR as an email draft by the software application; e) asking the DKIM email server to send out a DKIM email based on the email draft from the DKIM email account to a CA server or a CA server cluster by the software application; f) creating a certificate according to X.509 specification by the CA server or one server of the CA server cluster, wherein a subject name field or a subject alternative field of the certificate is set as an email address of the DKIM email account; a public key field of the certificate is set as the public key in the CSR; the DKIM email is encoded and embedded in a reserved field of the certificate as a proof; the encoding of the DKIM email preserves a DKIM signature and all the parts covered by the DKIM signature; the resulting certificate is a proof-equipped certificate; and g) sending back the proof-equipped certificate in the form of email to the DKIM email server for the computing device to download or making the proof-equipped certificate downloadable for the computing device by the CA server or another server of the CA server cluster.

According to the present invention, the computing device may be a laptop computer, a desktop computer, a tablet, a smart phone or a server. The CSR may be in a format defined by PKCS#10 specification, encoded by Base64 and put in the body or the header fields of the DKIM email. The email title, some header fields or some part of the email body of the DKIM email may be set as a specified phrase for the CA server or the CA server cluster to recognize the intent of request for proof-equipped certificate. A specific email address may be assigned to receive the DKIM email for the CA server or the CA server cluster.

Preferably, the proof-equipped certificate may include the encoded DKIM email embedded in an Extensions field of the proof-equipped certificate according to X.509 specification. The proof-equipped certificate is only valid for a short time defined by a Not Before field and a Not After field therein according to X.509 specification. The short time may range from 10 seconds to 1800 seconds.

An alternative method for issuing proof-equipped certificates for a CA is also provided by the present invention. The method includes the steps of: a)generating a private key and a public key by a software application installed in a computing device which has a processing unit operating the software application and a memory unit storing the keys; b) creating a CSR including the public key by the software application; c) enabling access to a DKIM email account of a DKIM email server of a specific domain by the software application; d) encoding the CSR and embedding the encoded CSR as an email draft by the software application; e) asking the DKIM email server to send out a DKIM email based on the email draft from the DKIM email account to a CA server or a CA server cluster by the software application; f) creating a certificate according to X.509 specification by the CA server or one server of the CA server cluster, wherein a subject name field or a subject alternative field of the certificate is set as an email address of the DKIM email account; a public key field of the certificate is set as the public key in the CSR; the DKIM email is kept as a proof in the CA server, one server of the CA server cluster or another storage server with an assigned URL (Uniform Resource Locator) for download; the URL can be derived from the certificate; the resulting certificate is a proof-equipped certificate; and g) sending back the proof-equipped certificate in the form of email to the DKIM email server for the computing device to download or making the proof-equipped certificate downloadable for the computing device by the CA server or one server of the CA server cluster.

In another aspect, the present invention also disclosed a system for issuing proof-equipped certificates for a CA. The system is installed or mounted in a server or a server cluster and comprises: an I/O processing module, for receiving a DKIM email sent from a DKIM email server, wherein the DKIM email server is asked to send out the DKIM email from a DKIM email account by a software application installed in a computing device connecting thereto; the computing device has a processing unit and a memory unit; the software application is operated by the processing unit and for generating a private key and a public key, creating a CSR including the public key, enabling access to the DKIM email account of the DKIM email server of a specific domain, and encoding the CSR and embedding the encoded CSR in an email draft; the DKIM email is based on the email draft; the memory unit stores the keys; and a certificate generation module, signally connected with the I/O processing module, for creating a certificate according to X.509 specification with the DKIM email from the I/O processing module, wherein a subject name field or a subject alternative field of the certificate is set as an email address of the DKIM email account; a public key field of the certificate is set as the public key in the CSR; the DKIM email is encoded and embedded in a reserved field of the certificate as a proof; the encoding of the DKIM email preserves a DKIM signature and all the parts covered by the DKIM signature; the resulting certificate is a proof-equipped certificate. The I/O processing module is further for sending back the proof-equipped certificate in the form of email to the DKIM email server for the computing device to download or making the proof-equipped certificate downloadable for the computing device.

According to the present invention, the computing device may be a laptop computer, a desktop computer, a tablet, a smart phone or a server. The CSR may be in a format defined by PKCS#10 specification, encoded by Base64 and put in the body or the header fields of the DKIM email. The email title, some header fields or some part of the email body of the DKIM email may be set as a specified phrase for the I/O processing module to recognize the intent of request for proof-equipped certificate. A specific email address may be assigned to receive the DKIM email for the I/O processing module.

Preferably, the proof-equipped certificate may include the encoded DKIM email embedded in an Extensions field of the proof-equipped certificate according to X.509 specification. The proof-equipped certificate is only valid for a short time defined by a Not Before field and a Not After field therein according to X.509 specification. The short time may range from 10 seconds to 1800 seconds. The I/O processing module and the certificate generation module may be programs installed in a server or a server cluster, or expansion cards mounted in a server or a server cluster. The DKIM email may be kept in the server, one server of the server cluster or another storage server with an assigned URL for download rather than encoded and embedded in the reserved field of the certificate and the URL can be derived from the certificate.

The present invention technically embeds the CSR in the DKIM email and utilizes the DKIM email as a verifiable proof for authorization of certificate issuance so that voluminous disposable digital certificates that expire in a very short time can be issued while existing CAs cannot do so due to the lack of verifiability. It makes trust transfer from the CA to a third party who owns the DKIM email server. CA can be trustless. Since the private key can be dynamically created and immediately wiped out from computer memory, hardware tokens for keeping the private key are no long required. Due to the very soon expiration time of digital certificate, revocation checks become unnecessary, or are only required to be simulated for compatibility. The problems mentioned above can be settled. Rules of digital signature are greatly changed by the present invention.

### BRIEF DESCRIPTION OF THE DRAWINGS

Fig. 1 is a schematic diagram of a system for issuing proof-equipped certificates for a CA, installed or mounted in a server cluster according to the present invention.
Fig. 2 shows parts of a DKIM email that are essential to verification.
Fig. 3 is a flow chart of a method for issuing proof-equipped certificates for a CA according to the present invention.
Fig. 4 is another schematic diagram of a system for issuing proof-equipped certificates for a CA, installed or mounted in a server according to the present invention.

### DETAILED DESCRIPTION OF THE PREFERRED EMBODIMENTS

The present invention will now be described more specifically with reference to the following embodiments.

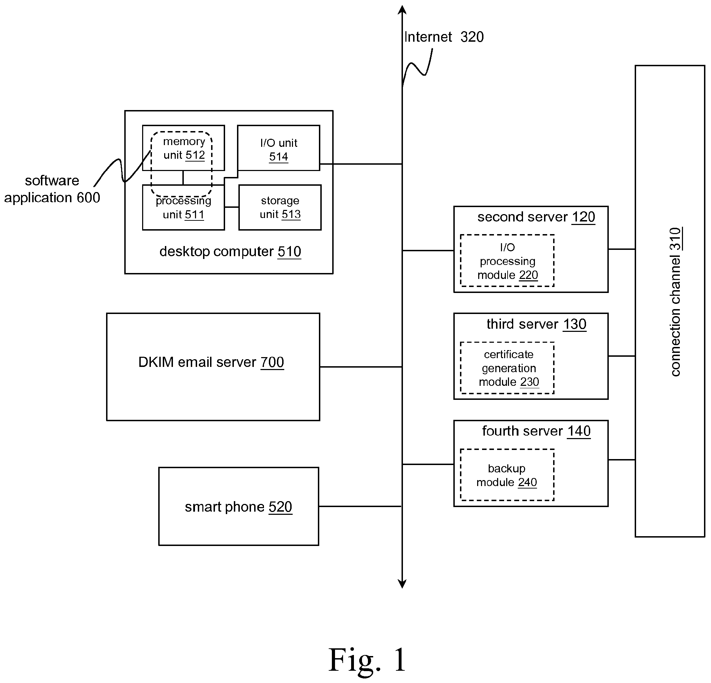

Please refer to Fig. 1. An embodiment of a system for issuing proof-equipped certificates for a CA, installed or mounted in a server cluster according to the present invention is disclosed. The infrastructure operating the system includes 3 servers in the server cluster. They are a second server 120, a third server 130 and a fourth server 140. The servers are connected through a connection channel 310. If the servers are located in separate server racks, the connection channel 310 may be Ethernet; if the servers are mounted in one rack, the connection channel 310 may be system bus. Each server has a unique module of the system installed or mounted therein. The second server 120 has an I/O processing module 220, the third server 130 has a certificate generation module 230, and the fourth server 140 has a backup module 240. Each module may be a program installed in the corresponding server. It may also be an expansion card mounted in that server. Functions of the modules, interaction between the modules and an environment for operating the system will be illustrated in detail below.

A software application 600 is required to be installed in a computing device that is connecting to the system and able to utilize the services provided by the system. Please see Fig. 1. There are some computing devices connected to the servers via Internet 320. The software application 600 can be stand-alone so that it can execute functions for requesting proof-equipped certificates only; it can also be a commercial software product for documenting, e.g. Microsoft Word™, Adobe Acrobat™, or for web browsing e.g. Chrome™, which has specific features with said functions embedded. Such commercial software products may achieve the functions by using open APIs or open source libraries (not shown). In practice, the software application 600 may be further in a state that it runs some functions according to instructions in the format of scripts from a remote source, e.g. a server. For example, an Edge™ browser runs the functions of key generation and CSR by the codes of JavaScript™ from a web server it visits. It is still an implementation of the software application according to the spirit of the present invention. The computing devices may be, but not limited to, laptop computers, desktop computers, tablets, smart phones or even servers. In this embodiment, a desktop computer 510 is used for illustration. There is also other computing device, e.g. a smart phone 520, online utilizing the services provided by the system at the same time as the desktop computer 510 does. The desktop computer 510 and all computing devices linked to the system have similar hardware components: a processing unit 511, a memory unit 512, a storage unit 513 and an I/O unit 514. Take the desktop computer 510 for example. The processing unit 511 is in charge of operation of the desktop computer 510. In fact, it is a CPU (Central Processing Unit). The processing unit 511 can also run to operate the software application 600 (marked by a dashed rounded rectangle frame). The memory unit 512, such as a DRAM (Dynamic Random Access Memory), e.g. DDR3, temporarily keeps codes and necessary data for the software application 600. When the software application 600 is not initiated, all the codes and data are stored in the storage unit 513, such as a hard drive. The I/O unit 514, mainly referring to the modules dealing with inputs and outputs of signals with external devices, is a networking module (e.g. Wi-Fi, LTE, Ethernet) and can receive information from the system via Internet 320 and transfer messages to a networking access point (not shown) for further use.

A job function of the software application 600 is to generate a private key and a public key. The memory unit 512 stores the keys. The pair of keys is used for digital signature and is of asymmetric cryptography. There are many methods available to achieve this goal, for example, Rivest-Shamir-Adleman (RSA) algorithm, Elliptic Curve Cryptography (ECC) algorithm, etc. The software application 600 as well creates a CSR. Format of the CSR is not limited. Preferably, it may conform to the PKCS#10 specification. In other embodiments, it may follow a specification of Signed Public Key And Challenge (SPKAC). Thus, the CSR includes the public key generated by the software application 600.

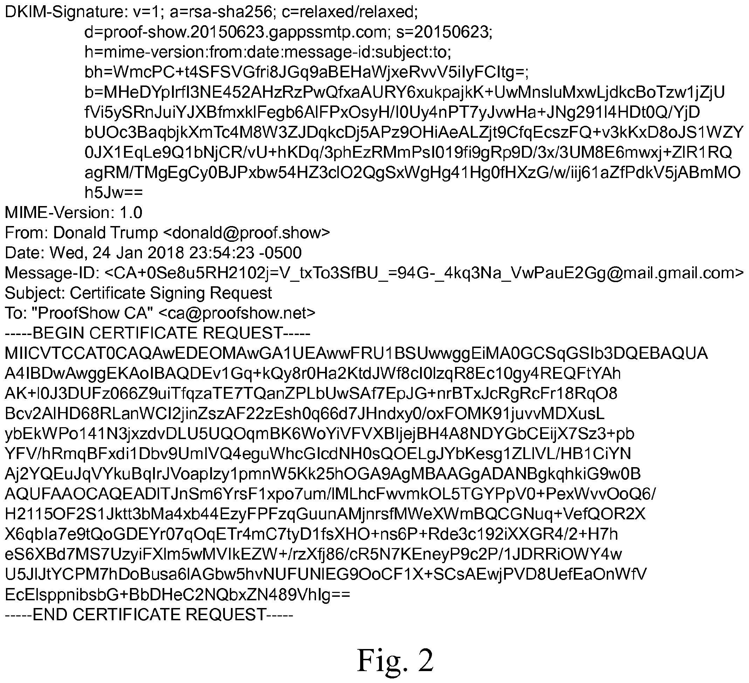

Meanwhile, the software application 600 can enable access to a DKIM email account of a DKIM email server 700 of a specific domain, like apple.com. This is a key feature of the present invention. DKIM is an email authentication method designed to detect email spoofing and allows the receivers to check that an email claimed to have come from a specific domain was indeed authorized by an owner of that domain. In order words, DKIM lets the domain owner digitally sign some parts of an outgoing email that include certain email header fields (which always include the From: field that indicates the sender) and the email body (which can embody attachments). Conventionally, there would be identifying information included along with the public key in a CSR. The identifying information may comprise a distinguished name, e.g. Tim Cook, an organization name, e.g. Apple Inc., and an email address, e.g. tim_cook@apple.com. It is the responsibility of a traditional CA to make sure such identifying information matches the real identity of the applicant who sends out the CSR before a certificate with such identifying information can be issued to the applicant, while users and relying parties need to trust that a traditional CA can be so responsible. A feature of the present invention is that the identifying information is no longer required as the email address of a DKIM email account will be used as the identifying information. In other words, the trust is transferred to the DKIM email server, or say, the domain owner who controls the DKIM email server. In order to do so, enabling access to the email account of the DKIM email server 700 is crucial. Furthermore, the software application 600 encodes the CSR it created and embeds the encoded CSR in an email draft which will be a DKIM email in the DKIM email server 700 for sending out later on (the DKIM email is based on the email draft). The CSR is encoded by Base64 and put in the body or the header fields of the DKIM email. In order to have a better understanding of the format of the DKIM email, please refer to Fig. 2. It shows parts of a DKIM email that are essential to verification. The DKIM signature (b=) covers the hash of the email body (bh=) and some key header fields (h=): MIME-Version, From, Date, Message-ID, Subject, and To. The cipher text between "BEGIN CERTIFICATE REQUEST" and "END CERTIFICATE REQUEST" is the Base64-encoded CSR. Thus, the CSR sent to the system to request a digital certificate is processed differently from what is traditionally done since the CSR comes within DKIM messages.

The format of the DKIM email is mandated to follow some rules. First, the email title, some header fields or some part of the email body of the DKIM email is set as a specified phrase for the I/O processing module 220 to recognize the intent of request for proof-equipped certificate, as otherwise the I/O processing module 220 will not process the DKIM email. In one example, the specified phrase is "Certificate Signing Request". The specified phrase can be arbitrarily assigned as long as the I/O processing module 220 knows it. Secondly, a specific email address is used by the DKIM email as the "Sent To" field. For example, the specific email address is ca@proofshow.net. The specific email address is also assigned for the I/O processing module 220 to receive the DKIM email. Of course, only one of the two restrictions is employed is also acceptable. After the DKIM email is ready, the software application 600 will drive the desktop computer 510 to ask the DKIM email server 700 to send the DKIM email with CSR to the I/O processing module 220. It should be emphasized that the processes executed by the software application 600 are not seen by users of the desktop computer 510. They are processed in the background of the operating system of the desktop computer 510 before a document is going to be signed.

The I/O processing module 220 is used to receive the DKIM email sent from the DKIM email server 700. The I/O processing module 220 can further send back a proof-equipped certificate created by the certificate generation module 230 in the form of email to the DKIM email server 700 for the desktop computer 510 to download, or make the proof-equipped certificate downloadable for the desktop computer 510. In fact, the second server 120 should be an email server with special designs for certificate download, e.g. following File Transfer Protocol (FTP) to act as a FTP server, if necessary. In practice, the I/O processing module 220 may be an email client. It means the I/O processing module 220 can fetch the DKIM email from the storage of another email server rather than do this job with the second server 120.

The certificate generation module 230 is signally connected with the I/O processing module 220. A main function of the certificate generation module 230 is to create a certificate according to X.509 specification with the DKIM email from the I/O processing module 220. In order to generate a verifiable certificate based on the authorization of certificate issuance, i.e. the applicant's authorization for the CA to issue a certificate in the name of the applicant based on specific public key, some fields defined by the X.509 specification must be specified. A subject name field or a subject alternative field of the certificate should be set as an email address of the DKIM email account. For example, either "tim_cook@applie.com" or "Tim Cook <tim_cook@apple.com>" can be set as the common name or the email in the subject name field. The former (i.e. tim cook@apple.com) is an RFC5322 address specification while the latter is a common address which has an associated display name (i.e. Tim Cook) followed by the RFC5322 address specification surrounded by angled brackets. Throughout this invention both are valid email addresses. A public key field of the certificate is set as the public key in the CSR. Most important of all, the DKIM email is encoded and embedded in a reserved field of the certificate as a proof. The encoding of a DKIM email preserves the DKIM signature and all the parts covered by the DKIM signature. The resulting certificate is a proof-equipped certificate. Specifically, the proof-equipped certificate includes the encoded DKIM email embedded in an Extensions field of the proof-equipped certificate according to X.509 specification. Since the DKIM email identifies the entity who sent the CSR, it can also prove that the same entity authorizes the CA to issue the certificate. The certificate generation module 230 will finish all other fields of the digital certificate and sign it if the DKIM signature is valid (neither a forged email of the specific domain nor a DKIM email being modified before arrival).

Conventional CAs often issue digital certificates with expiration time set to be 1-5 years after issuance. Sometimes, they will revoke an issued digital certificate before the expiration time it specifies thereon for a reason. Hence, it needs to offer a way for everyone to check if a digital certificate is still valid at a given time. In the past, this was done by providing a lengthy Certificate Revocation List (CRL), which nowadays is replaced by the more efficient Online Certificate Status Protocol (OCSP). Either CRL or the response from OCSP is required to be digitally signed by the CA. According to the present invention, another key feature is to set the expiration time of a digital certificate "very soon" after the issuance time compared with traditional ways so that the corresponding private key becomes disposable and revocation checks become unnecessary. How soon a digital certificate should expire after issuance depends on the use cases. It should be long enough for the digital certificate owner to finish as least one digital signature (or maybe a few) and short enough for the digital certificate itself to expire earlier than the normal revocation procedures can be done. A feasible time is 90 seconds. Of course, due to different scenarios, different short time other than 90 seconds should be applied. For example, the short time may be 10, 30, 60, 180, 600 seconds. According to user studies, the short time ranging from 10 seconds to 1800 seconds is preferred. The proof-equipped certificate expires in such short time can be defined by a "Not Before" field and a "Not After" field in the proof-equipped certificate according to X.509 specification. Namely, the time in the "Not After" field equals to the expiration time, e.g. 90 seconds after the issuance time which normally equals to the time in the "Not Before" field and is better later than the DKIM email reception time. When the expiration time is set as 90 seconds after issuance, it leaves the software application 600 (or the desktop computer 510) the same duration to fetch the digital certificate, finish digital signatures and wait for the "final time" of the digital certificate to come. The pair of private key and public key may be wiped out from computer memory before the final time (e.g. right after the completion of the desired digital signatures). Life of the digital certificate is short but the proof for authorization of certificate issuance lasts until the trust in the domain owner of the DKIM email server 700 is gone. It makes long-term validation possible.

The fourth server 140 is a spare server and the backup module 240 is used for backup of any one of the I/O processing module 220 and the certificate generation module 230. Once any one of these modules is out of order, the same functions can be soon transferred to the backup module 240 to maintain normal services for applicants and relying parties.

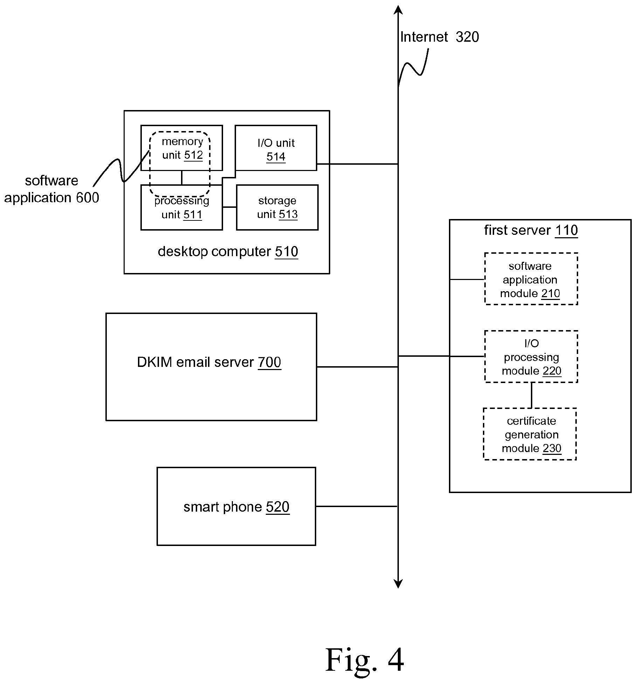

In the present embodiment, there is no agent for the system to distribute the software application 600 to the computing devices. In other embodiment, such agent exists. Please see Fig. 4. It is another schematic diagram of a system for issuing proof-equipped certificates for a CA, installed or mounted in a server cluster according to the present invention. Different from Fig. 1, Fig. 4 has a software application module 210. All modules are installed or mounted in a first server 110. Since only one server is applied, the connection channel 310 is not needed for connecting the modules. The software application module 210 operates to provide the software application 600 to install in the computing devices. The software application module 210 can be stand-alone so that it can execute the set functions without interaction with other module; it can also be associated with one of other modules. In the previous embodiment, one module is deployed to one server. In this embodiment, all modules installed or mounted in one server is also a workable way to implement the present invention.

It is still a possible configuration that some modules are installed or mounted in one server while other modules are deployed to individual server, respectively. For example, the I/O processing module 220 and the certificate generation module 230 are installed in the second server 120 while other configurations keep the same. If necessary, modules with extra functions may be used, e.g. an OCSP module in a fifth server (not shown) for responding to requests for certificate status.

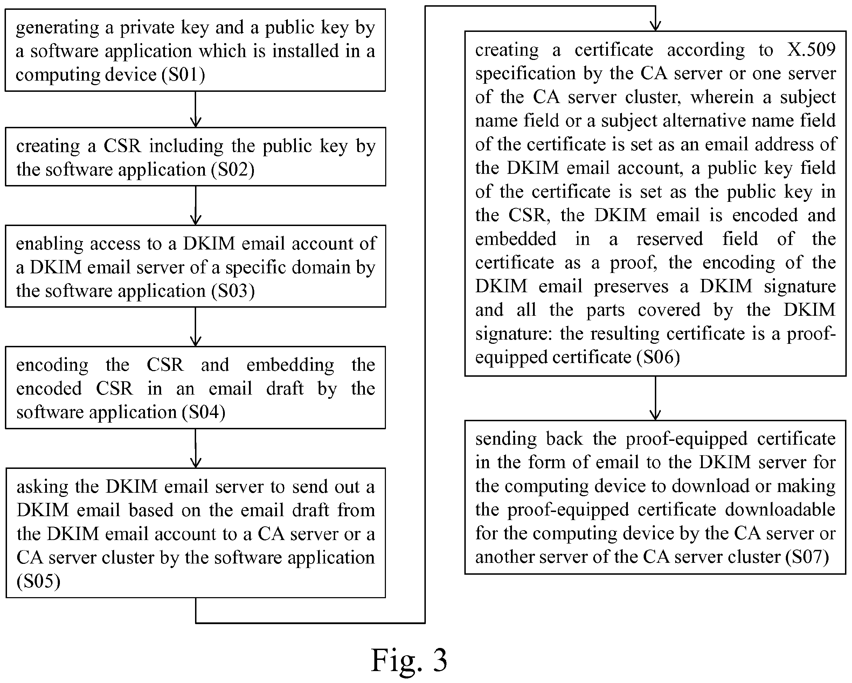

Operation of the system can be described by a method for issuing proof-equipped certificates for a CA using the above devices and modules. Please refer to Fig. 3. It is a flow chart of the mentioned method. The first step of the method is generating a private key and a public key by the software application 600 which is installed in a computing device (S01), e.g. the desktop computer 510 which has the processing unit 511 to operate the software application 600 and the memory unit 512 to store the keys. Then, creating a CSR including the public key by the software application 600 (S02).

A third step of the method is enabling access to a DKIM email account of the DKIM email server 700 of a specific domain by the software application 600 (S03). A fourth step of the method is encoding the CSR and embedding the encoded CSR as an email draft by the software application 600 (S04). Then, asking the DKIM email server 700 to send out a DKIM email based on the email draft from the DKIM email account to a CA server (the first server 110 comprises the certificate generation module 230) or a CA server cluster by the software application 600 (S05). Next, creating a certificate according to X.509 specification by the CA server or one server of the CA server cluster, wherein a subject name field or a subject alternative field of the certificate should be set as an email address of the DKIM email account, a public key field of certificate should be set as the public key in the CSR, the DKIM email is encoded and embedded in a reserved field of the certificate as a proof, the encoding of the DKIM email preserves a DKIM signature and all the parts covered by the DKIM signature: the resulting certificate is a proof-equipped certificate (S06). A last step of the method is sending back the proof-equipped certificate in the form of email to the DKIM email server 700 for the computing device to download or making the proof-equipped certificate downloadable for the computing device by the CA server or another server of the CA server cluster (S07). If possible, there could be an extra step between the step S05 and the step S06 that check if a DKIM signature of the DKIM email is valid. If the answer is yes, process the step S06; if the answer is no, drop the DKIM email. Details of the elements described above are the same as what were disclosed in the system. It is not repeated again.

According to the present invention, there is an alternative method for achieving the same goal as mentioned above. All steps of this method are the same as that disclosed by the previous method except S06. An S06' replacing S06 in the alternative method is creating a certificate according to X.509 specification by the CA server or one server of the CA server cluster, wherein a subject name field or a subject alternative field of the certificate is set as an email address of the DKIM email account; a public key field of the certificate is set as the public key in the CSR; the DKIM email is kept as a proof in the CA server, one server of the CA server cluster or another storage server with an assigned URL for download; the URL can be derived from the certificate; the resulting certificate is a proof-equipped certificate. It should be noticed that the proof, DKIM email, is kept in somewhere for download when needed rather than being encoded and embedded in a reserved field of the certificate to send back. The URL becomes another proof backed by the DKIM email. Accordingly, functions of the certificate generation module 230 should be adjusted that the DKIM email is kept in the server, one server of the server cluster or another storage server with an assigned URL for download rather than encoded and embedded in the reserved field of the certificate and the URL may be put in a reserved field of the certificate.

While the invention has been described in terms of what is presently considered to be the most practical and preferred embodiments, it is to be understood that the invention needs not be limited to the disclosed embodiments. On the contrary, it is intended to cover various modifications and similar arrangements included within the spirit and scope of the appended claims, which are to be accorded with the broadest interpretation so as to encompass all such modifications and similar structures.

## Claims

1. A method for issuing proof-equipped certificates for a Certificate Authority (CA), comprising the steps of:
a) generating a private key and a public key by a software application installed in a computing device which has a processing unit operating the software application and a memory unit storing the keys;
b) creating a Certificate Signing Request (CSR) including the public key by the software application;
c) enabling access to a Domain Keys Identified Mail (DKIM) email account of a DKIM email server of a specific domain by the software application;
d) encoding the CSR and embedding the encoded CSR as an email draft by the software application;
e) asking the DKIM email server to send out a DKIM email based on the email draft from the DKIM email account to a CA server or a CA server cluster by the software application;
f) creating a certificate according to X.509 specification by the CA server or one server of the CA server cluster, wherein a subject name field or a subject alternative field of the certificate is set as an email address of the DKIM email account; a public key field of the certificate is set as the public key in the CSR; the DKIM email is encoded and embedded in a reserved field of the certificate as a proof; the encoding of the DKIM email preserves a DKIM signature and all the parts covered by the DKIM signature; the resulting certificate is a proof-equipped certificate; and
g) sending back the proof-equipped certificate in the form of email to the DKIM email server for the computing device to download or making the proof-equipped certificate downloadable for the computing device by the CA server or another server of the CA server cluster.

2. The method according to claim 1, wherein the computing device is a laptop computer, a desktop computer, a tablet, a smart phone or a server.

3. The method according to claim 1, wherein the CSR is in a format defined by PKCS#10 specification, encoded by Base64 and put in the body or the header fields of the DKIM email.

4. The method according to claim 1, wherein the email title, some header fields or some part of the email body of the DKIM email is set as a specified phrase for the CA server or the CA server cluster to recognize the intent of request for proof-equipped certificate.

5. The method according to claim 1, wherein a specific email address is assigned to receive the DKIM email for the CA server or the CA server cluster.

6. The method according to claim 1, wherein the proof-equipped certificate includes the encoded DKIM email embedded in an Extensions field of the proof-equipped certificate according to X.509 specification.

7. The method according to claim 1, wherein the proof-equipped certificate is only valid for a short time defined by a Not Before field and a Not After field therein according to X.509 specification.

8. The method according to claim 7, wherein the short time ranges from 10 seconds to 1800 seconds.

9. A method for issuing proof-equipped certificates for a CA, comprising the steps of:
a) generating a private key and a public key by a software application installed in a computing device which has a processing unit operating the software application and a memory unit storing the keys;
b) creating a CSR including the public key by the software application;
c) enabling access to a DKIM email account of a DKIM email server of a specific domain by the software application;
d) encoding the CSR and embedding the encoded CSR as an email draft by the software application;
e) asking the DKIM email server to send out a DKIM email based on the email draft from the DKIM email account to a CA server or a CA server cluster by the software application;
f) creating a certificate according to X.509 specification by the CA server or one server of the CA server cluster, wherein a subject name field or a subject alternative field of the certificate is set as an email address of the DKIM email account; a public key field of the certificate is set as the public key in the CSR; the DKIM email is kept as a proof in the CA server, one server of the CA server cluster or another storage server with an assigned URL (Uniform Resource Locator) for download; the URL is derived from the certificate; the resulting certificate is a proof-equipped certificate; and
g) sending back the proof-equipped certificate in the form of email to the DKIM email server for the computing device to download or making the proof-equipped certificate downloadable for the computing device by the CA server or one server of the CA server cluster.

10. A system for issuing proof-equipped certificates for a CA, installed or mounted in a server or a server cluster, comprising:
an I/O processing module, for receiving a DKIM email sent from a DKIM email server, wherein the DKIM email server is asked to send out the DKIM email from a DKIM email account by a software application installed in a computing device connecting thereto; the computing device has a processing unit and a memory unit; the software application is operated by the processing unit and for generating a private key and a public key, creating a CSR including the public key, enabling access to the DKIM email account of the DKIM email server of a specific domain, and encoding the CSR and embedding the encoded CSR in an email draft; the DKIM email is based on the email draft; the memory unit stores the keys; and
a certificate generation module, signally connected with the I/O processing module, for creating a certificate according to X.509 specification with the DKIM email from the I/O processing module, wherein a subject name field or a subject alternative field of the certificate is set as an email address of the DKIM email account; a public key field of the certificate is set as the public key in the CSR; the DKIM email is encoded and embedded in a reserved field of the certificate as a proof; the encoding of the DKIM email preserves a DKIM signature and all the parts covered by the DKIM signature; the resulting certificate is a proof-equipped certificate;
wherein the I/O processing module is further for sending back the proof-equipped certificate in the form of email to the DKIM email server for the computing device to download or making the proof-equipped certificate downloadable for the computing device.

11. The system according to claim 10, wherein the computing device is a laptop computer, a desktop computer, a tablet, a smart phone or a server.

12. The system according to claim 10, wherein the CSR is in a format defined by PKCS#10 specification, encoded by Base64 and put in the body or the header fields of the DKIM email.

13. The system according to claim 10, wherein the email title, some header fields or some part of the email body of the DKIM email is set as a specified phrase for the I/O processing module to recognize the intent of request for proof-equipped certificate.

14. The system according to claim 10, wherein a specific email address is assigned to receive the DKIM email for the I/O processing module.

15. The system according to claim 10, wherein the proof-equipped certificate includes the encoded DKIM email embedded in an Extensions field of the proof-equipped certificate according to X.509 specification.

16. The system according to claim 10, wherein the proof-equipped certificate is only valid for a short time defined by a Not Before field and a Not After field therein according to X.509 specification.

17. The system according to claim 16, wherein the short time ranges from 10 seconds to 1800 seconds.

18. The system according to claim 10, wherein the I/O processing module and the certificate generation module are programs installed in a server or a server cluster, or expansion cards mounted in a server or a server cluster.

19. The system according to claim 10, wherein the DKIM email is kept as a proof in the server, one server of the server cluster or another storage server with an assigned URL for download rather than encoded and embedded in the reserved field of the certificate and the URL is derived from the certificate.
